# EUROPEAN PATENT APPLICATION

(11) **EP 4 152 172 A1**
(43) Date of publication of application: **22.03.2023**
(21) Application number: 22159943.4
(22) Date of filing: 03.03.2022
(51) Int. Cl.: G06F 16/00, G06F 40/00

(54) **INFORMATION PROCESSING APPARATUS, INFORMATION PROCESSING METHOD, AND RECORDING MEDIUM**

(30) Priority: 15.09.2021 JP 2021150588
(71) Applicant: KABUSHIKI KAISHA TOSHIBA, Minato-ku Tokyo 105-0023 (JP)
(72) Inventor: Wang, Lan, Minato-ku, Tokyo, 105-0023 (JP); Iwamasa, Mikito, Minato-ku, Tokyo, 105-0023 (JP); Fujiwara, Koji, Minato-ku, Tokyo, 105-0023 (JP)
(74) Representative: Hoffmann Eitle

(57) **Abstract**

An information processing apparatus includes a mapper that determines a mapping candidate corresponding to a description included in the input data from among hierarchically structured classes or properties included in a standard data model. The mapper detects a class or a property that exactly matches or partially matches, with respect to a schema included in the input data and a content thereof, the content from a class hierarchical structure of the standard data model and a set of properties defined for a class, and determines a first mapping candidate based on the detected class or property.

## Description

### FIELD

Examples in the present disclosure relates to an information processing apparatus, an information processing method, and a program.

### BACKGROUND

In recent years, with the spread of a Cypher Physical System (CPS) and an Internet of Things (IoT) system, a large amount of data such as sensor data and control data has been generated. In addition, the data are also used in a plurality of systems.

However, in order to handle the same data in different systems, it is necessary to identify what the data represents in each system, that is, a schema or a set of schemas for data is necessary. There are many cases where a schema of data is ambiguous and may present multiple different data. For example, when a value of a voltage is described as 5 V in certain data, another system that may not be able to determine whether the voltage indicates the maximum voltage or the rated voltage.

Therefore, it is required that the data can be mechanically interpreted without ambiguity, and the data model is being developed. For example, the OPC-UA used in Industri4.0 discloses a new specification so that the meaning of data of the OPC-UA can be interpreted and unified. In addition, the AAS, which is a standard framework of the CPS, specifies a reference structure to a data model.

However, in a case where existing data that is not compatible with the data model is used, a meaning indicated by the data is interpreted manually and mapped to a definition item such as a class or a property defined in the data model, which is a heavy burden. In addition, since information for determining a mapping destination is not included in data, mapping may not be accurate in many cases.

### BRIEF DESCRIPTION OF THE DRAWINGS

FIG. 1 is a block diagram showing an example of an information processing apparatus according to an example of the present disclosure.
FIG. 2 is a diagram illustrating a standard data model.
FIG. 3 is a diagram illustrating an example of a table indicating definition items related to properties.
FIG. 4 is a diagram illustrating an example of input data to be used.
FIG. 5 is a schematic flowchart of the overall process of an information processing apparatus 1 according to the example of the present disclosure.
FIG. 6 is a diagram illustrating an example of a mapping resu It.
FIG. 7 is a block diagram illustrating an example of a hardware configuration according to an example of the present disclosure.

### DETAILED DESCRIPTION

An information processing apparatus as an example of the present disclosure includes a mapper configured to determine a mapping candidate corresponding to a description included in input data from among hierarchically structured classes or properties included in a standard data model, wherein
the mapper detects a class or a property that exactly matches or partially matches, with respect to a schema included in the input data and a content thereof, the content from a class hierarchical structure of the standard data model and a set of properties defined for a class, and determines a first mapping candidate based on the detected class or property.

Hereinafter, examples of the present disclosure will be described with reference to the drawings.

### (First example)

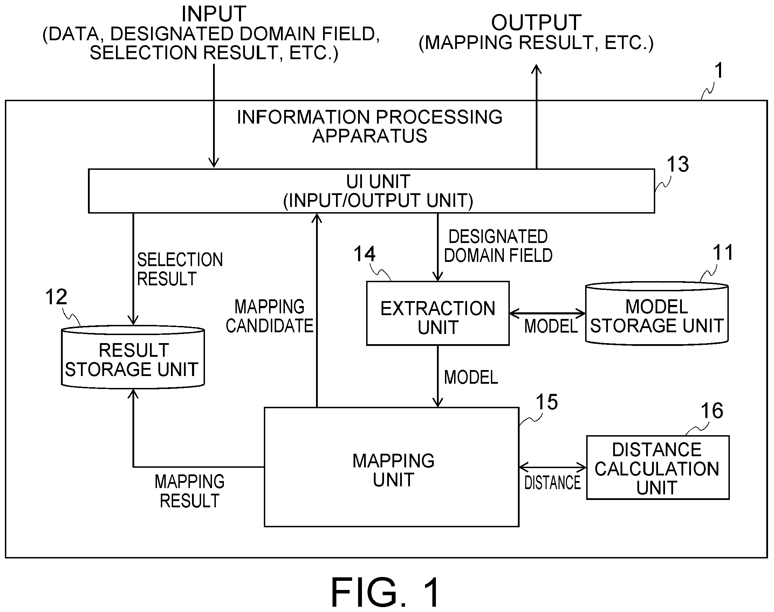

FIG. 1 is a block diagram showing an example of an information processing apparatus according to an example of the present disclosure. The information processing apparatus 1 according to the present example includes a model storage unit 11, a result storage unit 12, a UI unit (input/output unit) 13, an extraction unit 14, a mapping unit 15, and a distance calculation unit 16.

Note that each component of the information processing apparatus 1 illustrated in FIG. 1 may be subdivided or aggregated. Furthermore, the information processing apparatus 1 may include components not illustrated in FIG. 1. For example, the model storage unit 11 and the result storage unit 12 may be configured as one storage unit, or the UI unit 13 may be divided into an input unit and an output unit. Furthermore, for example, some components may be included in an apparatus different from the information processing apparatus 1. That is, the information processing apparatus 1 may include a plurality of apparatuses. In an information processing system, it is often the case that the apparatus is divided into devices that perform respective processes exclusively for the purpose of distribution of processing loads, maintenance of availability, and the like. That is, the information processing apparatus 1 may be a device that operates alone, or may be a server-client type device that cooperates with a server on a communication network such as a cloud.

The information processing apparatus 1 of the present example uses the standard data model and the input data, and represents what the input data indicates with items (definition items) defined by the standard data model such as a class and a property. Note that definition items corresponding to the entire input data may be mapped, or definition items corresponding to part of the input data, that is, a description (in other words, the content) in the input data may be mapped.

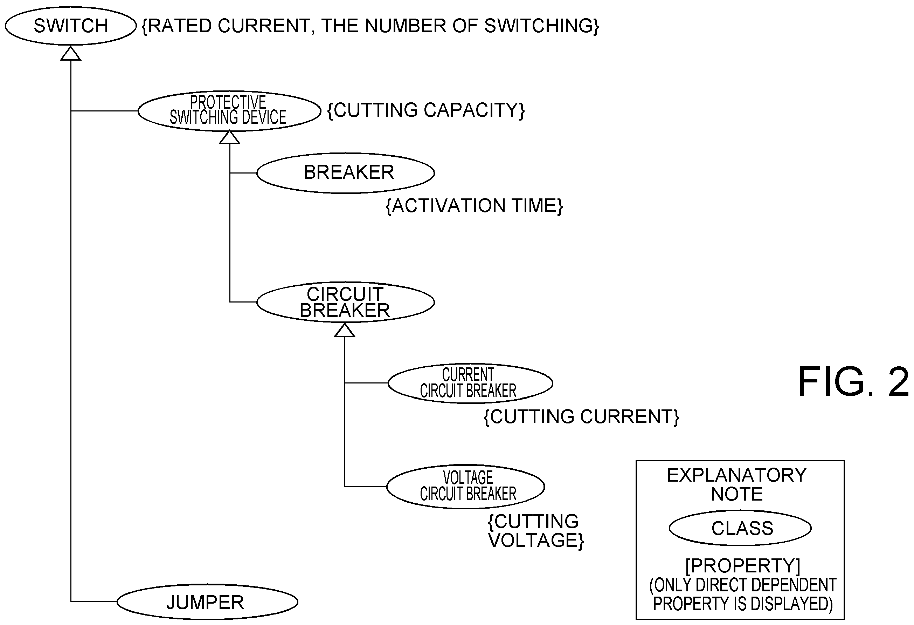

FIG. 2 is a diagram illustrating a standard data model. The standard data model includes a class and a property of the class. In addition, in the example of FIG. 2, the standard data model is systematically represented, in other words, is hierarchically structured, and the inheritance relationship of respective classes represented by an elliptical object is indicated as tree-like graph input data. For example, there is a class of "protective switching device" below a class of "switch", which indicates that "switch" is a higher class concept than "protective switching device". In addition, there are terms enclosed by symbols {} below the elliptical object, which indicate a property defined by (directly linked to) the class.

The descendant class inherits properties directly linked to the ancestor classes. Therefore, for example, "breaker" has "activation time" which is a property directly linked, "cutting capacity" which is a property linked to "protective switching device" of a higher class, and "rated current" and "the number of switching" which are properties linked to "switch" of a further higher class.

Note that what is set as the class and the property is not particularly limited. Furthermore, the standard data model defined by the international standard may be used, or the standard data model uniquely defined by the user of the information processing apparatus 1 may be used. In addition, there may be a case where the standard data model does not have such a vertical relationship of the class. In other words, there may also be a standard data model that includes only classes with flat relationship.

Note that, in the present example, it is assumed that a predetermined standard data model is used, but the information processing apparatus 1 may edit the standard data model based on an input from the user.

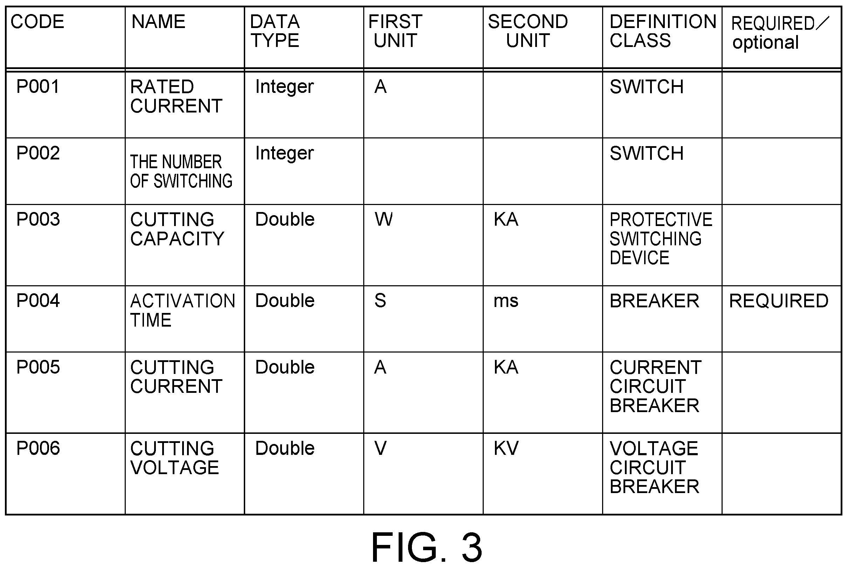

Further, in the standard data model, there is a more detailed definition item for the class or the property. FIG. 3 is a diagram illustrating an example of a table indicating definition items related to properties. In the example of FIG. 3, definition items of the properties illustrated in FIG. 2 are illustrated. A "code" column representing a unique identifier is indicated in the first column of the table of FIG. 3. In addition, in the third column of the table, a data type indicating a type of a value, set for a property, such as an integer (Integer) or a floating point (Double) is illustrated. In addition, in the fourth and fifth columns of the table, possible units of the value set for the property are shown. Note that one or more units may be set as described above. The seventh column of the table indicates whether the property must be necessarily included in the input data, and for example, the property of "activation time" with a description of "required" must be necessarily included in the input data related to the class of "breaker". Such a definition item indicating a feature of a property can also be used for mapping.

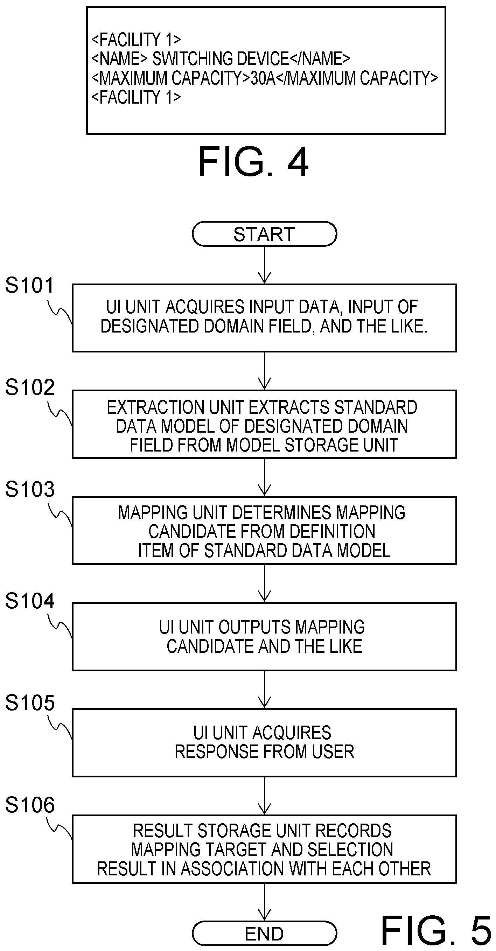

FIG. 4 is a diagram illustrating an example of input data to be used. In the example of FIG. 4, a structure (schema) using symbols < > and </> is taken. A name included in < > or </> is described as "schema name". In addition, a value indicated between < > and </> is described as "content". That is, the input data to the information processing apparatus 1 includes a description such as "<schema name>" or "<schema name> content </schema name>".

What the input data indicates is recognized from the schema name or the content. For example, in the input data of FIG. 4, in the first row and the last row, it can be recognized that the input data is input data related to "facility 1". In addition, in the second row, it can be recognized that the data is input data related to "switching device" included in "facility 1". Further, in the third row, it can be recognized that "maximum capacity" of "switching device" is "30A".

However, when the input data does not conform to the standard data model and does not use the name of the definition item of the standard data model, the system that handles the data conforming to the standard data model cannot understand the content indicated by the input data. For example, although the input data illustrated in FIG. 4 relates to "switching device", there is a class of "protective switching device" in the standard data model of FIG. 2, but there is neither a class nor a property of "switching device". In addition, there is neither a class nor a property named "maximum capacity". That is, the input data illustrated in FIG. 4 does not conform to the standard data model of FIG. 2. Then, it is difficult to handle the input data illustrated in FIG. 4 in a system conforming to the standard data model. However, when the information processing apparatus 1 of the present example estimates which definition item of the standard data model in FIG. 3 "switching device" of the input data in FIG. 4 corresponds to, the input data illustrated in FIG. 4 can be handled in the system conforming to the standard data model.

Note that, as described above, the information processing apparatus 1 may determine the class or the property corresponding to the entire input data, or may determine the class or the property corresponding to part of the input data. For example, the information processing apparatus 1 can determine that the input data of FIG. 4 corresponds to the class of "protective switching device" of the standard data model, and can determine that the description of "switching device" of the input data of FIG. 4 corresponds to the class of "protective switching device" of the standard data model, and the description of "maximum capacity" of the input data of FIG. 4 corresponds to the property of "cutting capacity" of the standard data model.

Note that the class or the property determined by the information processing apparatus 1 and corresponding to the input data or the description of the input data is described as a "mapping candidate". This is because, in the present example, it is assumed that one or more mapping candidates are output and one of the mapping candidates is selected (approved) by the user, and the mapping candidate selected (approved) by the user is described as a "mapping destination" to be distinguished. Note that, as a matter of course, the information processing apparatus 1 can also determine the mapping destination from among one or more mapping candidates based on a predetermined condition. In addition, in a case where the information processing apparatus 1 outputs one mapping candidate, it can be said that the information processing apparatus 1 has determined the mapping destination. That is, the mapping candidate may be read as a mapping destination.

Next, an internal configuration of the information processing apparatus 1 will be described.

The model storage unit 11 stores the standard data model. The result storage unit 12 stores the mapping result, that is, the input data used for mapping and the mapping destination of the input data.

In the present description, the model storage unit 11 and the result storage unit 12 are separated in consideration of easy understanding of the description, but as described above, both storage units may be configured as one storage unit. Further, both the storage units may store another data. For example, when the mapping unit 15 narrows down mapping candidates, a result during the narrowing down may be stored in the result storage unit 12.

In addition, both the storage units may be constructed with an input database such as a relational input database or an XML database, or may be a memory or a storage that stores a file in a format such as a CSV, an XML, or a JSON.

The UI unit 13 (input/output unit) 102 receives input information used for the process of the information processing apparatus 1 to output a processing result of the information processing apparatus 1. For example, input data used for mapping is included in the input information. In addition, in a case where a plurality of standard data models is stored in the model storage unit 11, information capable of recognizing which standard data model is used is included. The information may be, for example, a name of a standard data model to be used, information associated in advance with the standard data model, or the like. The standard data model is generally prepared for each domain field, and is prepared for each field such as a power field, a measurement equipment field, an electrical and electronic field, and a material field. Therefore, designation of a domain field may be received as the input information.

Furthermore, the UI unit 13 also acquires a response to the processing result output, for example, acceptance of the output mapping candidate, selection from the plurality of output mapping candidates, and the like. In a case where the mapping destination is determined in this manner, the UI unit 13 transmits the mapping destination to the result storage unit 12 in order to store the mapping destination in the result storage unit 12.

Furthermore, the UI unit 13 may output a form such as a screen requesting the user to input the additional information to the input data, and receive the additional information. For example, when the number of mapping candidates cannot be narrowed down to a predetermined number, information such as a property not included in the input data may be displayed, and input of a value of the displayed property may be accepted.

The UI unit 13 may be realized by a graphical user interface (GUI). Alternatively, it may be the communication unit that transmits and receives commands, files, and the like. That is, the input/output format of the UI unit 13 is not particularly limited. Furthermore, the input information may be transmitted from an input device such as a keyboard, a mouse, or a touch panel, or a communication device connected via a network, and the UI unit 13 may passively receive the information. Alternatively, a path indicating the position of the input data may be set in the information processing apparatus 1, and the UI unit 13 may actively read the input data in the path.

The extraction unit 14 extracts the standard data model used for mapping from the standard data models stored in the model storage unit 11. For example, in a case where a domain field is designated as the input information, the extraction unit 14 extracts a standard data model related to the designated domain field. In this case, it is assumed that the standard data model stored in the model storage unit 11 is stored in advance in the storage unit so that the corresponding domain field can be recognized.

The mapping unit 15 determines one or more mapping candidates for the input data or the description included in the input data from the definition items of the standard data model. A method of determining the mapping candidate will be described later.

When a plurality of mapping candidates is determined, the mapping unit 15 may set the precedence order for the mapping candidate. For example, by inputting the schema name or the content of the input data and each mapping candidate to the distance calculation unit 16, the semantic distance may be acquired for each mapping candidate, and the precedence order may be determined based on each semantic distance. For example, the precedence order may be set to be higher in order of decreasing semantic distance. Furthermore, for example, in a case where a mapping candidate is determined using a definition item of a class or a property, the mapping candidate may include a mapping candidate based on the definition item and a mapping candidate not based on the definition item. In such a case, the mapping unit 15 may set the mapping candidate based on the definition item to have a higher precedence over the mapping candidate not based on the definition item.

By outputting the mapping candidates together with the precedence order, the user can easily determine one of the plurality of mapping candidates when the plurality of mapping candidates is output, and can easily determine whether to approve the mapping candidate output by the user when one mapping candidate is output.

In addition, in a case where the number of mapping candidates cannot be narrowed down to a predetermined number or the like, the mapping unit 15 may detect a property which is included in the class of the narrowed mapping candidate and is not included in the input data from the standard data model to output the detected property to the user via the UI unit 13 in order to request the user to input the additional information. The mapping candidate can be further narrowed down by the user additionally inputting the information about the property not included in the input data.

The mapping unit 15 refers to the past mapping result stored in result storage unit 12, and may use the past mapping result to determine the mapping candidate when the new input data is identical to the input data of the past mapping result.

Further, even when the past input data similar to the new input data is included in the mapping result, the mapping unit 15 may use the past mapping result. For example, the mapping unit 15 may calculate a difference between the new input data and each piece of past input data, acquire a semantic distance by inputting the difference to the distance calculation unit 16, and determine that the new input data and the past input data are similar when the semantic distance is within a prescribed threshold value.

Furthermore, in a case where the past input data similar to the new input data is included in the mapping result, the mapping unit 15 may output the difference (discrepancy) between both the input data to the user via the UI unit 13 using the difference between the mapping candidates for both the input data. As a result, the user can recognize a lack of description, a mistake, or the like of the new input data.

When mapping unit 15 decides the mapping destination, the mapping unit 15 transmits the mapping result to the result storage unit 12 to store the mapping result.

The distance calculation unit 16 calculates a semantic distance between the data of the input data and the mapping destination data. As described above, the input is performed by the mapping unit 15. It is known that the semantic distance can be calculated between the input data and the mapping destination data by the natural language processing method of Word2Vec based on a similar word dictionary of WordNeT for the content of each schema included in the input data. The distance calculation unit 16 may be realized using such a known method.

Next, the determination of the mapping candidate of the mapping unit 15 will be described. Note that the determination methods described below may be appropriately combined and used. Further, when a mapping candidate is not determined when a certain determination method is performed, another determination method may be performed. In addition, mapping candidates may be determined by the first determination method, mapping candidates may be determined by the second determination method, and overlapping mapping candidates in both determination methods may be left. In this manner, the mapping candidates may be narrowed down.

Note that a class or a property closely related to the class or the property set as the mapping candidate below may also be set as the mapping candidate. For example, an upper class or a sibling class for the class set as the mapping candidate may be set as the mapping candidate. A method of determining a class having deep relevance, for example, up to which parent class is included in the mapping candidate may be appropriately determined according to the specification of the information processing apparatus 1 or the like.

The mapping unit 15 may detect an item that exactly matches or partially matches the schema name of the input data from among the definition items of the standard data model and use the item as a mapping candidate. For example, in a case where the input data of FIG. 4 is used, three schema names of "facility 1", "name", and "maximum capacity" are included in the input data, and the mapping candidate can be determined when there is a definition item of the standard data model that exactly matches or partially matches any of these.

The mapping unit 15 may detect an item that exactly matches or partially matches the content of the input data from among the definition items of the standard data model and use the item as a mapping candidate. For example, in a case where the input data of FIG. 4 is used, the input data includes contents of "switching device" and "30A", and a mapping candidate can be determined when there is a definition item of the standard data model that exactly matches or partially matches any of these.

In addition, the mapping unit 15 may detect a class or a property that does not match in name but can be related from definition items of the standard data model and use the class or the property as a mapping candidate.

For example, it may detect an item in which a schema name or a content is similar in name from definition items of the standard data model and use it as a mapping candidate. For example, the distance calculation unit 16 may calculate the semantic distance between the schema name or the content and the definition item of the standard data model, and the mapping unit 15 may use the definition item of the standard data model having the semantic distance within a predetermined value as a mapping candidate. For example, when the input data of FIG. 4 is used, "cutting capacity" may be detected as being similar to the schema name of "maximum capacity". In addition, "switch" or "protective switching device" may be detected as being similar to the content of "switching device".

Furthermore, for example, the mapping unit 15 may regard a class or a property that is allowed to have a unit included in the input data as a mapping candidate based on the definition item of the class or the property. For example, the input data of FIG. 4 includes a description of "<maximum capacity> 30A </maximum capacity>", and this "A" means ampere. In a case where a unit is included in the input data in this manner, a property that is allowed to have the same unit may be detected. For example, in the example of FIG. 3, "rated current", "cutting current", and "cutting capacity" are detected because it is shown that they may have a unit of ampere. Although it is illustrated that "cutting capacity" is allowed to have "KA (kiloampere)" as the second unit, "cutting capacity" may also be detected because KA is a kind of ampere although the size is different.

Note that, in a case where a plurality of units is set in the definition item of the class or the property, such as the first unit and the second unit in FIG. 3, each unit may be treated equally, and the schema name and the content may be compared with all of the plurality of units, or may be compared with some units (for example, the first unit), and when there is no match, compared with some other units (for example, the second unit).

Furthermore, for example, the mapping unit 15 may regard a class or a property that is allowed to have a data type included in the input data as a mapping candidate based on the definition item of the class or the property. For example, since "30" of "30A" of the input data in FIG. 4 is an integer value (Integer), a property whose data type is an Integer may be determined as the mapping candidate. In the example of FIG. 3, since the data type of "the number of switching" is an Integer, "the number of switching" may be set as a mapping candidate.

Furthermore, for example, the mapping unit 15 may determine the definition items of the standard data model to be excluded from the mapping candidate based on the definition items of the class and the property. For example, in the example of FIG. 3, it is illustrated that the class of "breaker" requires the property of "activation time". Therefore, when "activation time" is not included in the input data, "breaker" may be excluded from the mapping candidate.

When the property is the mapping candidate, the class having the detected property may also be determined as the mapping candidate. For example, each described mapping candidate in data may be determined from a class and a property, but a mapping candidate of the entire data may be determined from a class. For example, in a case where a property of "cutting capacity" is set as a mapping candidate, in the example of FIG. 2, "protective switching device", "current circuit breaker", and "breaker" are detected as mapping candidates for the class having the property of "cutting capacity". Note that since inheriting the property from "protective switching device" of the upper class, "breaker" has a property of "cutting capacity".

By such a narrowing method, definition items of the standard data model are narrowed down, and a mapping candidate considered to correspond to a schema name or a content of the input data is determined.

As an example, an example of determining the class of the mapping candidate for the entire input data in FIG. 4 using the above method will be described below. Note that the determination is not limited to the order of use and the way of use (whether to add or delete the mapping candidate) of the determination method in this example. First, as a first determination method, a class or a property that exactly matches a schema name is searched for, and as a second determination method, a class or a property that exactly matches a content is searched for. However, since there are no classes and properties exactly matching the names of "switching device", "maximum capacity" and "30A", mapping candidates are not determined in the first and second determination methods. Note that, in a case where partial matching is allowed, "protective switching device" partially matching "switching device" may be set as a mapping candidate. Next, as a third determination method, a class or a property similar to a schema name is searched for, and as a fourth determination method, a class or a property similar to a content is searched for. Here, it is assumed that "switching device" is similar to "protective switching device". Therefore, "protective switching device" is included in the mapping candidate. In addition, the lower class of the mapping candidate is also included. Therefore, "protective switching device" and its lower classes "breaker", "circuit breaker", "current circuit breaker", and "voltage circuit breaker" are also included in the mapping candidates. Next, in order to narrow down these mapping candidates, as a fifth determination method, a class that does not have a property capable of having the unit "A (ampere)" included in the input data as a unit is checked and excluded from the mapping candidate. In the example of FIG. 3, since "rated current", "cutting capacity", "cutting current", and "cutting capacity" can have the unit "A (ampere)", classes not having these properties are excluded from the mapping candidate. However, none of current mapping candidates are excluded because they have any of these properties. Next, as a sixth determination method, a class that does not have a property capable of having the "Integer" that is a data type of the input data is checked and excluded from the mapping candidate. However, since all the current object candidates have "rated current" that can have the "Integer", nothing is excluded from the mapping candidate. Next, as a seventh determination method, it is checked whether an object candidate has a required property, and an object candidate whose required property is not included in the input data is excluded. Since the input data of FIG. 4 does not include "activation time", "breaker" that requires "activation time" is excluded from the mapping candidate. The remaining "protective switching device", "circuit breaker", "current circuit breaker", and "voltage circuit breaker" may be output as mapping candidates.

Next, a flow of each process of the components will be described. FIG. 5 is a schematic flowchart of the overall process of an information processing apparatus 1 according to the example of the present example. Note that the flowchart in the present description is an example, and is not limited to the described example. The procedures may be redisposed, added, and omitted according to required specifications, changes, and the like of the examples. It is assumed that the standard data model is stored in the model storage unit 11 in advance.

The UI unit 13 acquires input information (S101). As described above, the input information includes information necessary for performing mapping, such as input data and a designated domain field for uniquely determining a standard data model. The extraction unit 14 extracts the standard data model of the designated domain field from the standard data models stored in the model storage unit 11 (S102).

The mapping unit 15 decides the mapping candidate according to a predetermined decision method (S103). At this time, the mapping unit 15 may transmit, to the distance calculation unit 16, a text indicating the schema name or the content of the input data and a text indicating the name of the class or the property of the standard data model for the distance calculation unit 16, and the distance calculation unit 16 may calculate the semantic distance between the two input texts, as necessary, for example, in the case of determining similarity of the schema name or the like and providing a precedence order.

The UI unit 13 outputs a processing result such as a mapping candidate from the mapping unit 15 (S104). The user selects a mapping candidate based on the output, and the UI unit 13 acquires the selection by the user (S105). The recording unit records the mapping target and the selection result in association with each other (S106). In this way, the flow of mapping ends.

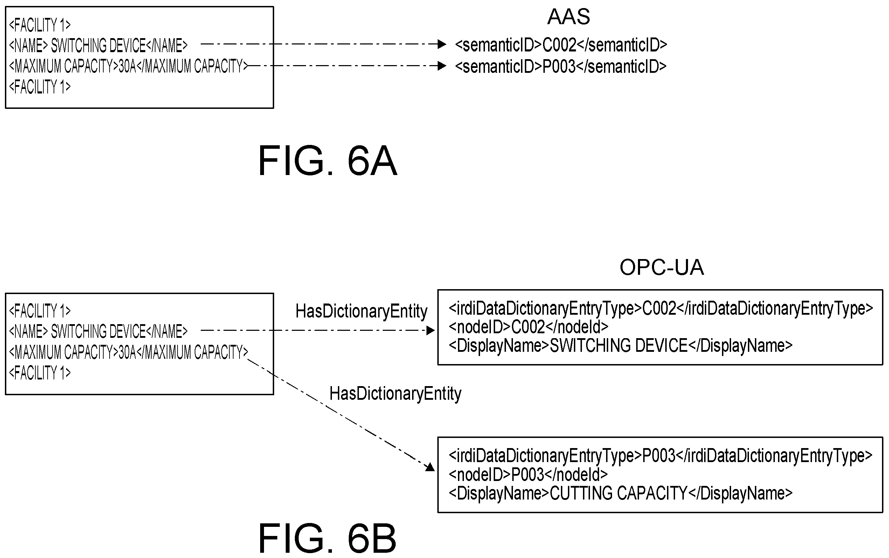

FIG. 6 is a diagram illustrating an example of a mapping result. FIG. 6 illustrates an example in which a corresponding mapping destination is determined and recorded with respect to the description of "<schema name> content </schema name>". FIG. 6(A) illustrates an example in which a mapping result is recorded as an asset administration shell (AAS). The identifier (for example, code) of the class or the property of the mapping destination is represented by a semantic ID so that it can be seen which of the class and property defined in the standard data model (for example, IEC 61987) of the mapping destination "switching device" and "30A" of the input data of FIG. 4 correspond to. In this manner, the mapping destination may be represented by an identifier or the like defined by the standard data model instead of the name. FIG. 6(B) illustrates a case where a device model (DI) defined by OPC-UA is used as a mapping result. Note that HasDictionaryEntity may be used for reference to DI. In the OPC-UA, contents described in the input data are also described so as to be understood, such as <DisplayName> switching device </DisplayName> in FIG. 6(B).

In a case where there is a discrepancy between the input data and the associated mapping destination, a definition of a discrepancy may be displayed via the UI unit 13. In the example of FIG. 6(A), with respect to <maximum capacity> 30A <maximum capacity> of the input, the standard data model P003 of the mapping destination is the cutting capacity and defines the unit of W or KA. Therefore, the input data and the mapping target have a definition discrepancy between the name and the unit, and related definition contents are displayed on the input/output unit.

As described above, the information processing apparatus 1 according to the present example can automatically map input data that does not conform to the standard data model and a partial description thereof to definition items of the standard data model. Specifically, from combinations of features of the class or the property, such as units, data types, and the like, it is possible to narrow down object candidates that may be associated with the input data or a partial description thereof. Further, by presenting the precedence order, it is possible to reduce a burden on the user to select a mapping destination from a large number of mapping candidates. In addition, it is possible to obtain an effect of improving the quality of the input data such as improvement in incompleteness or definition of the input data according to the standard data model definition of the mapping destination.

At least part of the above example may be realized by a dedicated electronic circuit (that is, hardware) such as an integrated circuit (IC) on which a processor, a memory, and the like are mounted. At least part of the above example may be realized by executing software (program). For example, using a general-purpose computer device as basic hardware and causing a processor such as a CPU mounted on the computer device to execute a program, it is possible to realize the process of the above examples. That is, each unit illustrated in FIG. 1 can be implemented as a process.

For example, the computer can be the apparatus of the above example by the computer reading dedicated software stored in a computer-readable storage medium. The type of the storage medium is not particularly limited. In addition, the computer can be the apparatus of the above example by the computer installing dedicated software downloaded via the communication network. In this way, information processing by software is specifically implemented using hardware resources.

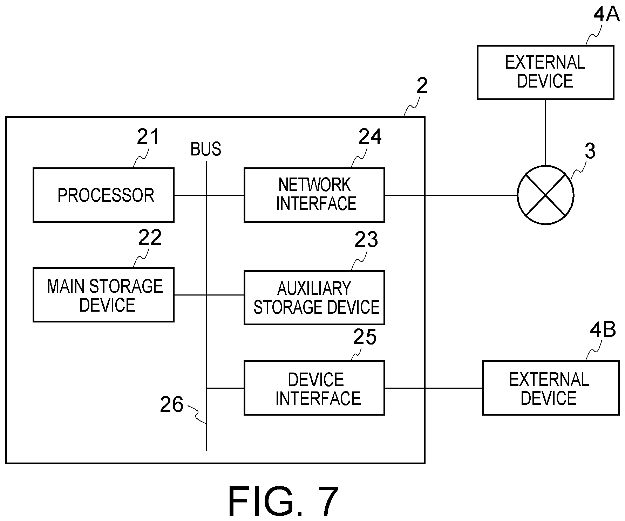

FIG. 7 is a block diagram illustrating an example of a hardware configuration according to an example of the present disclosure. The information processing apparatus 1 includes a processor 21, a main storage device 22, an auxiliary storage device 23, a network interface 24, and a device interface 25, and can be realized as a computer device 2 connected thereto via a bus 26. The storage unit of the information processing apparatus 1 can be implemented by the main storage device 22 or the auxiliary storage device 23, and components other than the storage unit, such as the UI unit 13, can be implemented by the processor 21.

Note that the computer device 2 of FIG. 7 includes components the number of which is one, but may include a plurality of the same components. In addition, although FIG. 7 illustrates one computer device 2, software may be installed in a plurality of computer devices, and each of the plurality of computer devices may execute different partial process of the software.

The processor 21 is an electronic circuit including a control device and an arithmetic device of a computer. The processor 21 performs an arithmetic process based on data and programs input from each device or the like of the internal configuration of the computer device 2 to output a calculation result and a control signal to each device or the like. Specifically, the processor 21 executes an OS, software, or the like of the computer device 2, and controls each device constituting the computer device 2. The processor 21 is not particularly limited as long as it can perform the above processing.

The main storage device 22 is a storage device that stores instructions executed by the processor 21, various pieces of data, and the like, and information stored in the main storage device 22 is directly read by the processor 21. The auxiliary storage device 23 is a storage device other than the main storage device 22. Note that these storage devices mean any electronic component capable of storing electronic information, and may be a memory or a storage. The memory includes a volatile memory and a non-volatile memory, but may be any of them.

The network interface 24 is an interface for connecting to the communication network 3 wirelessly or by wire. As the network interface 24, a network interface conforming to an existing communication standard may be used. The network interface 24 may exchange information with an external device 4A connected for communication via the communication network 3.

The device interface 25 is an interface such as a USB directly connected to an external device 4B. The external device 4B may be an external storage medium or a storage device such as a database.

The external devices 4A and 4B may be output devices. The output device may be, for example, a display device that displays an image, a device that outputs sound or the like, or the like. Examples thereof include a liquid crystal display (LCD), a cathode ray tube (CRT), a plasma display panel (PDP), a speaker, and the like, but are not limited thereto.

Note that the external devices 4A and 4B may be input devices. The input device includes devices such as a keyboard, a mouse, and a touch panel, and provides information input by these devices to the computer device 2. A signal from the input device is output to the processor 21.

While certain examples have been described, these examples have been presented by way of example only, and are not intended to limit the scope of the disclosures. Indeed, the novel methods and systems described herein may be embodied in a variety of other forms; furthermore, various omissions, substitutions and changes in the form of the methods and systems described herein may be made without departing from the spirit of the disclosures. The accompanying claims and their equivalents are intended to cover such forms or modifications as would fall within the scope and spirit of the disclosures.

## Claims

1. An information processing apparatus comprising:
a mapper configured to determine a mapping candidate corresponding to a description included in input data from among hierarchically structured classes or properties included in a standard data model, wherein
the mapper detects a class or a property that exactly matches or partially matches, with respect to a schema included in the input data and a content thereof, the content from a class hierarchical structure of the standard data model and a set of properties defined for a class, and determines a first mapping candidate based on the detected class or property.

2. The information processing apparatus according to claim 1, wherein
the mapper determines a second mapping candidate based on a definition item related to a property included in the standard data model.

3. The information processing apparatus according to claim 2, wherein
the definition item includes a unit that a property included in the standard data model is allowed to have, and
the mapper determines a property, as a third mapping candidate, that is allowed to have a unit included in the input data.

4. The information processing apparatus according to claim 3, wherein
the definition item includes a data type that a property included in the standard data model is allowed to have, and
the mapper determines a property, as a fourth mapping candidate, that is allowed to have a data type included in the input data.

5. The information processing apparatus according to claim 4, wherein
at least two of the first to fourth mapping candidates are set as the mapping candidates.

6. The information processing apparatus according to claim 2, wherein
the definition item includes a property required by a class included in the standard data model, and
the mapper excludes, from the mapping candidates, a class that requires a property not included in the input data.

7. The information processing apparatus according to claim 1, further comprising:
a distance calculator that calculates a semantic distance between two pieces of input data, wherein
the distance calculator calculates a semantic distance to a schema included in the input data or a content thereof using a definition item of each of classes or properties included in the standard data model, and
the mapper determines the mapping candidate based on the calculated semantic distance.

8. The information processing apparatus according to claim 1, further comprising:
a distance calculator that calculates a semantic distance between two pieces of input data, wherein
the distance calculator calculates a semantic distance between a schema included in the input data and a content thereof, and the mapping candidate, and
the mapper sets a precedence order for the mapping candidates based on the calculated semantic distance.

9. The information processing apparatus according to claim 1, further comprising:
an outputter that outputs the mapping candidate.

10. The information processing apparatus according to claim 1, further comprising:
a storage configured to store the input data and a mapping candidate determined to correspond to the input data in association with each other.

11. The information processing apparatus according to claim 9, further comprising:
a storage configured to store the input data and a mapping candidate determined to correspond to the input data in association with each other; and an input unit that receives, when a plurality of classes is output from the outputter, an input of a class selected from the plurality of classes, wherein
the storage stores the input data and the selected class in association with each other.

12. The information processing apparatus according to claim 10, wherein
when acquiring new input data, the mapper searches whether input data same as or similar to the new input data is stored in the storage, and when input data same as or similar to the new input data is detected, the mapper determines a mapping candidate corresponding to a schema included in the detected input data or a content thereof as a mapping candidate corresponding to a schema included in the new input data or a content thereof.

13. The information processing apparatus according to claim 9, wherein
the mapper detects, using stored input data and an associated mapping candidate, a definition discrepancy between the stored input data and the associated mapping candidate, and the outputter outputs the definition discrepancy.

14. An information processing method comprising:
determining a mapping candidate corresponding to a description included in input data from among hierarchically structured classes or properties included in a standard data model, wherein
the method includes detecting a class or a property that exactly matches or partially matches, with respect to a schema included in the input data and a content thereof, the content from a class hierarchical structure of the standard data model and a set of properties defined for a class, and determining the mapping candidate based on the detected class or property.

15. A computer-readable recording medium storing a program executed by a computer, the medium causing the computer to execute:
determining a mapping candidate corresponding to a description included in input data from among hierarchically structured classes or properties included in a standard data model, wherein
a class or a property that exactly matches or partially matches, with respect to a schema included in the input data and a content thereof, the content from a class hierarchical structure of the standard data model and a set of properties defined for a class is detected, and the mapping candidate based on the detected class or property is determined.
